(19) Europäisches Patentamt
European Patent Office
Office européen des brevets

(11) **EP 4 538 424 B1**

## (12) EUROPEAN PATENT SPECIFICATION

(45) Date of publication and mention
of the grant of the patent:
**22.10.2025 Bulletin 2025/43**

(21) Application number: **23202478.6**

(22) Date of filing: **09.10.2023**

(51) International Patent Classification (IPC):
**C25B 1/04** *(2021.01)*     **C25B 9/05** *(2021.01)*
**C25B 9/60** *(2021.01)*     **C25B 9/75** *(2021.01)*
**C25B 9/77** *(2021.01)*     **C25B 15/08** *(2006.01)*

(52) Cooperative Patent Classification (CPC):
**C25B 1/04; C25B 9/05; C25B 9/60; C25B 9/75;
C25B 9/77; C25B 15/08;** Y02E 60/36

(54) **WATER ELECTROLYSER STACK USING ALKALINE MEDIUM**

WASSERELEKTROLYSEURSTAPEL MIT ALKALISCHEM MEDIUM

EMPILEMENT D'ÉLECTROLYSEURS D'EAU UTILISANT UN MILIEU ALCALIN

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**16.04.2025 Bulletin 2025/16**

(73) Proprietor: **OÜ Stargate Hydrogen Solutions**
**10621 Tallinn (EE)**

(72) Inventors:
• **GROLIG, Jan Gustav**
**11415 Tallinn (EE)**
• **PRIIMÄGI, Priit**
**11415 Tallinn (EE)**
• **RAHNEL, Stina**
**11415 Tallinn (EE)**

• **KÜNGAS, Rainer**
**11415 Tallinn (EE)**

(74) Representative: **Sarap, Margus**
**Jalaka 42-23**
**50109 Tartu (EE)**

(56) References cited:
**EP-A1- 4 130 340        KR-A- 20220 065 541**
**KR-B1- 102 324 396     US-B1- 6 554 978**
**US-B2- 6 878 244**

Remarks:
The file contains technical information submitted after the application was filed and not included in this specification

**Description**

TECHNICAL FIELD

The present invention relates to a water electrolyser stack using alkaline medium.

BACKGROUND ART

In alkaline water electrolysis, water is electrochemically converted into hydrogen and oxygen in alkaline medium: $H_2O = H_2 + 0.5\ O_2$. An electrolysis cell comprises two electrodes (an anode and a cathode) and an electrolyte. The electrolyte comprises a liquid alkaline medium such as an aqueous solution of hydroxides and/or carbonates. The alkaline electrolyte flows through the anode and cathode compartment of the cell, which are connected fluidically in parallel, thereby immersing the electrodes in the electrolyte. During operation, an electric potential is applied between the two electrodes, resulting in the flow of electrolysis current through the electrolysis cell. During operation, hydrogen is generated on the cathode according to the hydrogen evolution reaction (HER): $2\ H_2O + 2e^- = H_2 + 2\ OH^-$, while oxygen is generated on the anode according to the oxygen evolution reaction (OER): $2\ OH^- = 0.5\ O_2 + H_2O + 2e^-$. The electrolysis cell further comprises a porous separator (diaphragm) and/or an ion exchange membrane capable of conducting hydroxide ions and separating both half-cells to prevent mixing of the product gases. The electrodes are placed on either side of the membrane in a sandwich-like manner.

It is advantageous to place the electrodes as close as possible to the membrane from both sides in a sandwich-like manner, which on one hand minimizes the distance between the electrodes and thus decreases the ionic resistance, and on other hand ensures that the hydrogen gas bubbles evolve mostly at the back side of the electrodes, which leads to reduced overpotentials. This arrangement, often referred to as "zero-gap configuration", thus results in improved cell efficiency. The positioning of the electrodes for this configuration is achieved by pressing the electrodes and the diaphragm together and adjusting the contact pressure via elastic or rigid spacers placed next to the electrodes on the sides opposite to the side facing the diaphragm. Furthermore, electrical contact to the electrodes is established via the bipolar plates, which are in contact with the spacers.

The cells are typically assembled electrically in series in a cell stack between a first end plate and a second end plate. The higher the number of cells in the stack, the more hydrogen and oxygen can be produced in unit time. Similarly, the larger the surface area (footprint) of each cell in the stack, the more hydrogen and oxygen can be produced per cell at a fixed current density.

Alkaline electrolysis cell stacks can either operate at atmospheric pressure or at elevated pressure. The advantage of operating at elevated pressure is that hydrogen (and optionally oxygen) is produced at elevated pressure, thereby requiring fewer compressors and less energy to compress the gas to the desired pressure level. For pressurized alkaline electrolysers, typical operating pressures are in the range of 10 to 35 barg. Pressurized operation commonly requires the cells to be circular (or essentially circular) in shape. Furthermore, pressurized stacks typically comprise cell frames, i.e. components that house at least the electrodes and the pressurized fluids. The cell frames comprise a central opening which forms the reaction chamber(s) in the cell. The cell frames furthermore provide mechanical support to the cell components and in combination with gaskets prevent leakage of the alkaline electrolyte as well as product hydrogen and oxygen to the environment.

Upon the stacking of cell stack components to form a stack, a plurality of channels, created by the holes and openings in the cell frames, extend from the first end plate through the stack to the second end plate. The channels branch into the respective cells through a plurality of pathways. An electrolyte solution enters the stack through the channels and each individual cell is fed with the electrolyte solution via the pathways branching from the channels. The electrolyte either enters and exits the stack via the same end plate (sometimes referred to as "U-design") or the electrolyte enters the stack via one endplate and exits the stack via the other endplate (sometimes referred to as the "Z-design"). The U-design is particularly advantageous for use in alkaline electrolysers, since it significantly lessens the shunt (parasitic) currents in the stack, i.e. fraction of the applied current that bypasses the active cell area and therefore does not contribute towards the desired electrochemical reactions.

When the electrolyte is supplied to the stack with the U-design, at a particular time, the electrolyte supplied to each cell is not equal. The cell closest to the first end plate receives most electrolyte and the cells further along the stack receive less electrolyte than the previous cells. This phenomenon occurs as the flowpath for electrolyte is shortest through the cell next to the first end plate and the flowpath distance increases as the electrolyte travel farther from the first end plate. This leads to inhomogeneous distribution of the electrolyte within the cells. As the number of cells in the stack increases, certain cells at the end of the stack no longer receive the same amount of electrolyte as other cells. This leads to "electrolyte starvation" in cells in the latter portion of the stack. In other words, the cells at different positions along the stack receive progressively lower electrolyte flow, in the order from the first end plate towards the second end plate.

The inhomogeneous electrolyte distribution leads to thermal variation and current inefficiency. Furthermore, the thermal variation can lead to failure of stack components: for example, most commonly used diaphragm materials start to rapidly degrade when exposed to temperatures exceeding certain critical temperatures. In a stack with inhomogeneous electrolyte distribution between cells, the first cells (receiving above average electrolyte flow) will be cooled more effectively, leading to lower cell temperature, higher cell resistance, and hence lower cell efficiency. The high overpotentials in these first cells can lead to faster degradation of the cell components, such as electrodes. In a stack with inhomogeneous electrolyte distribution between cells, the last cells (receiving below average KOH flow) will be cooled less effectively, leading to higher cell temperature. If this cell temperature exceeds the critical temperature of the diaphragm, then diaphragm can fail before reaching its design lifetime. It is therefore highly desirable to ensure that the electrolyte distribution in the cell stack is as uniform as possible. Furthermore, in cells where electrolyte flow rate is low, the effectiveness of bubble removal decreases. As the bubbles are stuck on the electrodes, the cell experiences high resistances which in turn negatively affects electrolyser performance.

EP4071277A1 discloses a solution to inhomogeneous electrolyte flow into the cells in the stack by providing a bypass directing electrolyte flow to one of the diverting portions bypassing another one of said diverting portions which is axially closer to the electrolyte inlet than said one diverting portion. Bypass supplies electrolyte to cells farther away from the inlet before supplying the electrolyte to cells closer to the inlet. By said bypass, the pressure drop characteristic over the cells becomes more equilibrated or homogeneous, and a better performance at a fixed number of cells can be obtained, or an increase in the number of cells becomes possible without deterioration with respect to conventional electrolysers with fewer cells. The prior art additionally discloses that at least two differently structured cell frames need to be fabricated to be used in this arrangement, which increases the cost of electrolyser. Commonly, the cell frames are manufactured using injection molding. In order to manufacture differently structured cell frames, different injection molds are required, which increases the cost and complexity of the cell frame manufacturing process. Furthermore, the cell frames proposed in EP4071277A1 have additional channels to incorporate the bypass portion, these channels are closed when the cell frames are used before the bypass portion. Such an arrangement is likely to cause leakages in the stack. Furthermore, the cell frames need to be larger in size in order to accommodate the additional flow and bypass channels, leading to bulkier stack and thereby decreasing the volumetric hydrogen production rate of the stack. For some applications, available space is limited, and using the above approach would make the stack less suitable for these applications.

US11326267B2 discloses a polymer electrolyte membrane (PEM) electrolyser with a fluid supply unit comprising a first fluid supply path extending at least section-wise through the first electrochemical cell, and at least one second fluid supply path extending at least section-wise through the second electrochemical cell. The fluid supply unit is designed in such a way that the volume flow of the fluid through the first electrochemical cell and through the second electrochemical cell is at least substantially identical. To achieve uniform distribution, the fluid supply path must extend from inlet channel to the outlet channel of the individual cell and the fluid is distributed to half of the electrochemical cell. The design disclosed in the prior art refers to a single supply channel and a single outlet channel for anode and cathode, this single channel leads to mixing of gases. The prior art discloses having high-pressure drop at the channels and low-pressure drop-in the pathways. Moreover, the first cell and the second cell have different pressure drops, which would still lead to inefficient distribution of electrolyte to each cell in the electrolyser. Furthermore, to achieve different pressure drops in each cell, the cell structure needs to be different from each other. This design can increase the manufacturing cost of the electrolyser stack. Consequently, this approach generally has been limited to PEM electrolyser and the design adapted by in the prior art is not ideal to be used in alkaline electrolyser.

US20230155143A1 discloses a fuel cell interconnect which includes central fuel channels and peripheral fuel channels disposed on a first side of the interconnect, and central air channels and peripheral air channels on an opposing second side of the interconnect. The prior art proposes varying the cross-sectional area of central fuel/air channels to be smaller than the cross-sectional area of the peripheral fuel/air channels. This arrangement provides more fuel mass flow to the central portion of the adjacent fuel cell than to peripheral portions of the fuel cell inorder to direct more hydrogen fuel to areas having higher operating temperatures, thereby improving thermal stability. However, the approach in prior art, when adapted for alkaline electrolysers, generates excessive shunt currents (stray currents) through via the alkaline electrolyte solution in stack due to the large channel dimensions, leading to unacceptably large efficiency loss. The elevated operating temperature (between 500 and 900 °C) and the cell design of optimized for fuel cell applications is not suitable for use in the alkaline electrolyser stacks. Furthermore, in US20120155143A1, the electrolyte is a solid oxide material which is immobile and part of the cell structure. In case the present invention, the electrolyte is an alkaline medium, which is fed into each cell via inlet channel(s) and inlet pathways and removed from each cell via outlet pathways and outlet channel(s).

US6554978B1 discloses an electrolyser stack comprising a cell frame, the cell frame further comprising an inlet channel and an inlet pathway connecting the inlet channel to a central opening. The prior art discloses that the inlet channel has diameter between 1.5 cm and 2.5 cm and the diameter of the inlet pathway, which is also considered as inlet orifice, has diameter between 0.5 mm to 3 mm. However, the prior art does not address a solution to optimize the distribution of KOH across stacks of varying sizes.

KR20220065541A and KR102324396B1 filed by Korea Institute of Energy Research discloses a cell frame used in an electrolyser stack, the cell frame with an electrolysis space at the center of the cell frame. An electrolyte flow path connects a plurality of supply/discharge ducts to the electrolysis space. KR102324396B1 discloses that the electrolyte flow further comprises a plurality of protrusions to vary the thickness of the flow path. This structure is provided to apply resistance to the electrolyte flowing from the supply duct to the electrolysis space. Varying resistance of the electrolyte flow helps to reduce the shunt current travelling through the stack. KR20220065541A discloses that the electrolyte flow path comprises a flow path reducing unit and an outlet, wherein the width of the flow reducing unit is smaller than the width of the outlet, the outlet having a taper shape. The design is formed to control the electrolyte flow from the outlet to an electrolyte reaction unit.

EP4130340A1 filed by Industrie de Nora SpA discloses an electrolyser comprising cathodic and anodic cells respectively comprising a cathodic frame and an anodic frame. Each frame comprises a feed channel connecting a feeding inlet that is connected to an aperture in the frame to a feeding outlet opening to a central empty space in the cell frame. However, the prior arts do not provide an adaptable system to attain even supply of electrolyte to all the cells in the stack, that can be modified based on the stack length.

In the view of all the above approaches, there is a need for a scalable electrolysis stack, in particular alkaline electrolysis stack, where homogeneous electrolyte distribution can be achieved regardless of cell footprint and the number of cells in the stack, resulting in higher efficiency and improved stack lifetime.

DISCLOSURE OF INVENTION

The objective underlying the present invention is to achieve a uniform distribution of electrolyte to each cell in an alkaline electrolysis stack.

The object of the present invention is furthermore to ensure homogenous pressure drop over the cells leading to better performance of the stack.

Another object of the present invention is to reduce stray currents in the channels of the stack to ensure a high current (Faradaic) efficiency of the stack.

Furthermore, the object of the invention is to maintain thermal stability in the stack by establishing uniform temperature distribution of and uniform heat removal in the cells in the stack.

The above objective of the present invention can be achieved by the following technical solutions:

The various embodiments of the present invention disclose an alkaline water electrolyser stack comprising: a first end plate and a second end plate and a plurality of cells stacked in-between the first and the second end plate. Each cell comprises an anode cell frame and a cathode cell frame, each cell frame further comprises a central opening, at least one inlet channel transversing through the cell frame, and at least one inlet pathway grooved in the cell frame for connecting the inlet channel to the central opening. The inlet pathway comprises atleast one inlet orifice characterized by a minimum cross-sectional area in the inlet pathway. The cross-sectional area of the inlet channel in the stack is greater than the sum of the cross-sectional area of the plurality of inlet orifices in the stack by at least a predetermined factor. The predetermined factor needs to be larger than 1 and smaller than or equal to 4

According to one embodiment of the present invention, the surface of the inlet pathway constitutes a projection to form the inlet orifice by decreasing the width and/or the depth of the inlet pathway.

According to another embodiment of the present invention, the cell frame comprises an inset installed on the inlet pathway to form the inlet orifice by decreasing the depth and/or the width of the inlet pathway. The surface of the inlet pathway and an inner side of the inset facing the inlet pathway in combination defines the inlet orifice.

According to an alternate embodiment of the present invention, the inset comprises a feedthrough that forms the inlet orifice when installed in the inlet pathway.

According to one embodiment of the present invention, the thickness of the inset or the dimension of the feedthrough defines the cross-sectional area of the inlet orifice.

According to another alternate embodiment of the present invention, the inner side of the inset is configured as domed shape to constitute larger cross-sectional area of the orifice; alternatively, a protruding section of the inner side of the inset is configured to constitute smaller cross-sectional area of the orifice.

According to an embodiment of the present invention, the plurality of insets of a predetermined thickness and/or dimension of the feedthrough and/or structure are installed in the plurality of cell frames along the stack to create the inlet orifices with a predetermined cross-sectional area.

According to one embodiment of the present invention, the plurality of insets of varying thickness and/or the dimension of the feedthrough and/or the structure are installed in the plurality of cell frames along the stack to create a gradient in the cross-sectional areas of the orifices. The orifices at different positions along the stack have progressively increasing cross-sectional areas, in the order from the first end plate towards the second end plate.

According to one embodiment of the present invention, the inlet orifice is configured to be positioned at any location within the inlet pathway. However, the inlet orifice is preferably located closer to the central opening of the cell frame.

According to another embodiment of the present invention, the inset is either an add-on/detachable component or a built-in part of the cell frame.

According to a further embodiment of the present invention, the inlet pathway is a single pathway, wherein the inlet pathways alternatively comprise a plurality of pathways branching from the area near the orifice.

According to the present invention, the sum of cross-sectional area of the plurality of orifices is smaller by at least a predetermined factor than the total area of the inlet channel, wherein the predetermined factor is between 1 to 4, preferably between 1.2 and 1.8.

According to an embodiment of the present invention, the anode cell frame is identical to the cathode cell frame, wherein the anode cell frame is rotated by 180 degrees to be used the cathode cell frame.

According to one embodiment of the present invention, at least the anode or the cathode is operated at elevated pressure, preferably at 1.5 to 700 bars, preferably at 16 to 45 bars.

According to one embodiment of the present invention, the inlet channel transversing through the cell frames, extends from the first end plate through the stack towards the second end plate, wherein the alkaline medium is entering and exiting the stack through the first end plate.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation.

BRIEF DESCRIPTION OF THE DRAWINGS:

The summary above, as well as the following detailed description of illustrative embodiments, is better understood when read in conjunction with the appended drawings. For the purpose of illustrating the present invention, exemplary constructions of the embodiments of the invention are shown in the drawings, with references to the following diagrams wherein:

Fig. 1 is an explanatory view of a cell frame, according to an embodiment of the present invention. Fig. 1a is a front view of the cell frame, Fig. 1b is a cross section view of the inlet side of the cell frame.

Fig. 2 is an explanatory view of a cell frame, according to another embodiment of the present invention. Fig. 2a is a front view of the cell frame, Fig. 2b-2e are cross section views of the inlet side of the cell frame illustrating the structure of insets according to different embodiments of the present invention.

Fig. 3 is a schematic side view of an electrolyser stack, according to a preferred embodiment of the present invention.

Fig. 4 is a schematic view of a model system used for Computational Fluid Dynamics (CFD)-simulations of an inlet pathway and an inlet orifice, according to a preferred embodiment of the present invention.

Fig. 5 is a graph showing a pressure distribution along the inlet pathway obtained from a CFD-simulation of the model system of FIG. 4, according to a preferred embodiment of the present invention.

Fig. 6 is a schematic view of a model system of the electrolyser stack in Fig. 3 used for CFD-simulations, according to a preferred embodiment of the present invention.

Fig. 7 is a graph showing an electrolyte flowrate distribution in an electrolyser stack for different inlet channel areas, obtained from a CFD-simulation of the model system of FIG. 6, according to a preferred embodiment of the present invention.

Fig. 8 is a graph showing an electrolyte flowrate distribution in an electrolyser stack for different inlet orifice areas, obtained from a CFD-simulation of the model system of FIG. 6, according to a preferred embodiment of the present invention.

Fig. 9 is a graph showing an electrolyte flowrate distribution in an electrolysis stack for different inlet flowrates, obtained from a CFD-simulation of the model system of FIG. 6, according to a preferred embodiment of the present invention.

DETAILED DESCRIPTION OF THE INVENTION

In the following detailed description, a reference is made to the accompanying drawings that form a part hereof,

**EP 4 538 424 B1**

and in which the specific embodiments that may be practiced are shown by way of illustration. These embodiments are described in sufficient detail to enable those skilled in the art to practice the embodiments and it is to be understood that the logical, mechanical and other changes may be made without departing from the scope of the embodiments. The following detailed description is therefore not to be taken in a limiting sense.

The various embodiments of the present invention disclose an electrolyser stack, in particular an alkaline electrolyser stack, for electrochemically splitting water and generating hydrogen and oxygen. The electrolyser stack comprises a first end plate, a second end plate and a plurality of electrolysis cells stacked between the end plates. The end plates serve as negative and positive terminals, respectively, to which DC power is supplied. Each cell in the stack comprises of a plurality of cell components, including but not limited to at least two electrodes (one acting as an anode and other as cathode) placed on either side of a membrane, a bipolar plate placed between the cells, and at least two spacers placed next to the electrodes on either side of electrode-membrane-electrode assembly. The positioning of the electrodes close to the cell membrane is achieved by applying compression via the spacers.

According to an embodiment of the present invention, the electrode can be shaped as perforated metal sheets with a porous surface, woven metal meshes, expanded metal sheets, porous metal foams, porous metal felts, etc. The electrodes need to be long-term resistant against corrosion in alkaline environment as well as have good electrical conductivity and high electrochemical activity.

In the context of the present invention, the term "membrane" is used interchangeably with the terms "separator" and "diaphragm", and refers to the stack component comprising a polymer, porous or non-porous, that is used to separate the anode from the cathode and through which hydroxide ions are transported. The membrane needs to have a high thermal, chemical, and electrochemical resistance. Zirconium oxide-polysulfonic acid membranes are preferably used, however membranes with different configurations with base material being an inorganic oxide supported by a polymer fabric are also suitable. The materials considered for membranes include, but not limited to, oxide-ceramic materials, sulfonated polymers, perfluorinated sulfonated polymers and fiberglass-reinforced polyphenylene sulfides or polysulfones with inorganic oxides.

The bipolar plates as well as the spacers are mainly fabricated from nickel or nickel-coated steel. The spacers need to be designed to possess spring-like properties so the electrodes can be lightly pressed against the membrane with the spacers.

The cell frames comprise central openings which house or receive other cell components, such as spacers, electrodes, bipolar plates, and membranes. The stack components are sealed together with the help of gaskets. Each cell comprises two cell frames: an anode cell frame used at anode side of the cell and a cathode cell frame used at cathode side of the cell. The anode cell frame includes at least one inlet pathway connecting an inlet channel to a central opening, which is used for feeding liquid electrolyte solution into a cell anode compartment. The anode cell frame further includes at least one outlet pathway connecting the central opening to an outlet channel, which is used for receiving a mixture of the liquid electrolyte and produced oxygen gas from the cell anode compartment. There may be further inlet channels in the anode cell frame for feeding liquid electrolyte solution through the anode cell frame into the inlet channel of the adjacent (cathode) cell frame. The anode cell frame further includes at least one further outlet channel for transporting a mixture of liquid electrolyte solution and produced hydrogen gas into the outlet channel of the adjacent (cathode) cell frame. According to one embodiment of the present invention, the electrolyte is fed into the cells via a common inlet channel, i.e. there are no separate inlet channels for the anolyte and catholyte in the anode cell frame. The cathode cell frame includes at least one inlet pathway connecting an inlet channel to a central opening, which is used for feeding liquid electrolyte solution into a cell cathode compartment. The cathode cell frame further includes at least one outlet pathway connecting the central opening to an outlet channel, which is used for receiving a mixture of the liquid electrolyte and produced hydrogen gas from the cell cathode compartment. There may be further inlet channels in the cathode cell frame for feeding liquid electrolyte solution through the cathode cell frame into the inlet channel of the adjacent (anode) cell frame. The cathode cell frame further includes at least one further outlet channel for transporting a mixture of liquid electrolyte solution and produced oxygen gas into the outlet channel of the adjacent (anode) cell frame. According to one embodiment of the present invention, the electrolyte is fed into the cells via a common inlet channel, i.e. there are no separate inlet channels for the anolyte and catholyte in the cathode cell frame.

According to one embodiment of the present invention, the anode cell frame is identical to the cathode cell frame and the anode cell frame is rotated by 180 degrees to be used the cathode cell frame. The end plates and the cells are compressed and clamped together using tie rods and bolts. The clamping provides sealing pressure and a proper pressure distribution between different cell components. The clamping also ensures electrical connection between the bipolar plates.

The cell frame is primarily made of plastic including, but not limiting to, polysulfone, polyetheretherketone, acetal copolymer, polyethersulfone, polyphenylene, polyphenylene sulfide, polyphenylene oxide, polybenzimidazole, polyethyleneimine, polyamide-imides and other plastic polymers. The cell frame material can have fillers such as fibers, polyphenylene oxide and other suitable materials to provide additional strength and temperature tolerance. However, the cell frame can be made of metals, ceramics and other materials, and their combination thereof, with appropriate mechanical strength, thermal tolerance, electrically insulating properties and chemical resistance to withstand alkaline environment.

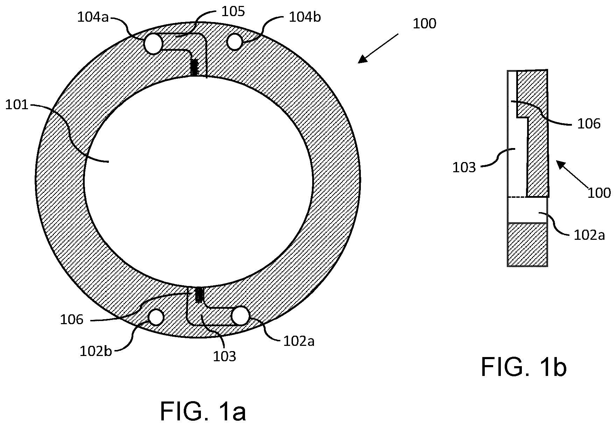

As shown in Fig. 1a, the cell frame (100) comprises a central opening (101) configured to accommodate the cell components. The central opening (101) acts as a container for holding the electrolyte required for the electrolysis process. A plurality of channels (102a, 102b, 104a,104b), transversing through the cell frame (100), comprise atleast one inlet channel (102a) for carrying the electrolyte within the stack. To ensure fluid communication between the inlet channel (102a) and the central opening (101), at least one inlet pathway (103) is provided. The electrolyte from the inlet channel (102a) is conveyed into the inlet pathway (103) from one end and exits to the central opening (101) from the other end of the inlet pathway (103). The channels further comprise at least one outlet channel (104a) arranged on the opposite side of the inlet channel (102a). The outlet channel (104a) is connected to the central opening (101) through an outlet pathway (105) configured for transporting the humified gases generated during the electrolysis process from the respective cell to the outlet channel (104a). The inlet channel (102a) and the outlet channel (104a) are positioned in a way that ensures that the gas that is produced in the cell via the electrolysis process rises upwards and is removed from the cell in the electrolyte flow via the outlet channel (104a).

Fig. 1b shows a cross-section view of the inlet side of the cell frame (100), according to an embodiment of the present invention. The inlet pathway (103) comprises an inlet orifice (106) characterized by a minimum cross-sectional area compared to the preceding and succeeding areas along the inlet pathway (103). A projection on the surface of the inlet pathway (103) is made to decrease the width (as shown in Fig. 1a) or the depth (as shown in Fig. 1b) of the inlet pathway (103) or both in combination, thereby forming the inlet orifice (106). The inlet orifice (106) can be positioned at any location within the inlet pathway (103) as required to achieve specific fluid flow control characteristics. The inlet orifice (106) is preferably positioned closer to the central opening (101) of the cell frame (100). The large cross-sectional area of the inlet channel (102a) and inlet pathways (103) ensures that the pressure drop of the electrolyte before the inlet orifice (106) is small compared to the pressure drop across the inlet orifice (106). This mechanism is adapted in each cell of the stack, thus ensuring that each individual cell, regardless of its position within the stack, receives a controlled and consistent quantity of liquid electrolyte. Furthermore, it guarantees that the electrolyte is effectively transported throughout the entire stack, reaching even the cells farthest away from the first end plate.

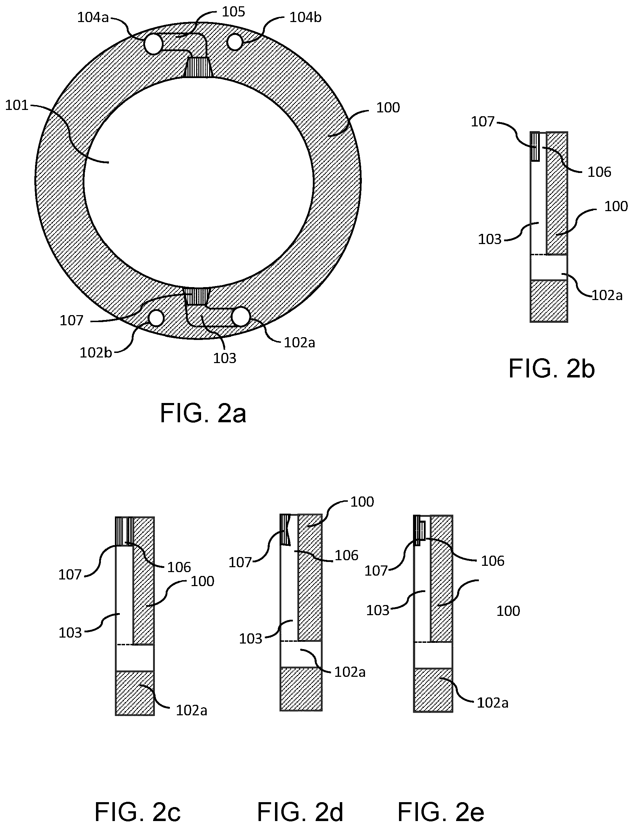

Fig. 2a depicts a cell frame according to an embodiment of the present invention. The inlet pathway (103) further comprises an inset (107) that is placed on the inlet pathway (103) to form the inlet orifice (106). The inset (107) is a flat plate of a predefined thickness that is inserted on a part of the inlet pathway (103) such that an inner side of the inset (107) forms a cover over the inlet pathway (103). The inset (107) is inserted and secured within the inlet pathway (103), resulting in the formation of a defined gap between the inset (107) and the inlet pathway (103) which serves as the inlet orifice (106). The inlet orifice (106) is defined by the thickness of the inset (107) and the depth of the inlet pathway (103). As seen in Fig. 2b, one side of the inlet orifice (106) is constituted by the inlet pathway (103) and the other side by an inner side of the inset (107) that is facing the inlet pathway. Alternatively, in a modified form of the present invention, the inset (107) comprises a feedthrough that forms the inlet orifice (106) when the inset (107) is completely pushed into the inlet pathway (103), as shown in Fig 2c. The inset (107) is an add-on/detachable component made of any metal or plastic or same material as the cell frame (100), that can be clipped on the inlet pathway (103). However, the inset (107) can also be a built-in part of the cell frame (100) as an extension on the inlet pathway (103).

The inset (107) with desired thickness and/or desired dimension of the feedthrough defines the cross-sectional area of the inlet orifice (106). Alternatively, the structure of the inner side of the inset (107) is altered to achieve desired cross-sectional area of the inlet orifice (106). As shown in Fig 2d, the inner side of the inset (107) is dome shaped to increase the cross-sectional area of the inlet orifice (106). As shown in Fig 2e, the inner side of the inset (107) comprises a section protruding in the inlet pathway (103) to decrease the cross-sectional area of the inlet orifice (106).

The inset (107) can be placed anywhere along the inlet pathway (103) to form the inlet orifice (106), preferably the inset (107) is placed closer to the central opening (101) of the cell frame (100). However, according to yet another embodiment of the present invention, the cell frame (100) comprises an additional component, for example: a ring-like structure, installed on an inner surface of the central opening (101). The additional component comprises the inlet orifice (106) and the component is positioned such that the inlet orifice (106) is aligned at the exit of the inlet pathway (103).

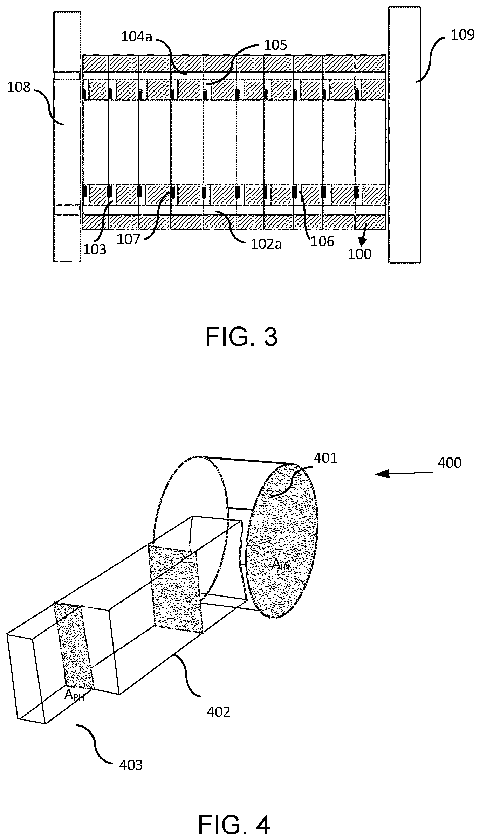

Fig 3. depicts an electrolyser stack, according to an embodiment of the present invention. The inlet channel (102a) and the outlet channel (104a) are holes transversing through the cell frames (100); when the cell frames (100) are stapled together, the through holes in the cell frames form the inlet channel (102a) and outlet channel (104a) for transporting electrolyte and humidified gases. The pathways are grooved in the cell frames (100) for diverting the electrolyte to the respective cell and collecting the mixture of liquid electrolyte and a product gas into the outlet channel (104a).

Referring to Fig 3, the electrolyte is supplied to the inlet channel (102a) at the first end plate (108). The inlet channel (102a) extends from the first end plate (108), through the stack, till the cell next to the second end plate (109). The electrolyte reaches each individual cell via the pathways emanating from the channels. The humidified gases produced in the cells exit through the outlet pathway (105) and leave the stack through the outlet channel (104a) returning to the first end plate (108). However, the present invention is adaptable for implementation in stacks featuring varying channel configurations. This includes configurations where the inlet channel is positioned at the first end plate while the outlet channel is located at the second end plate, as well as configurations where inlet channels are present at both end plates with the outlet channel situated in the middle plate of the stack.

In order to achieve uniform distribution of the electrolyte in each cell at a particular given time, the pressure in the inlet pathways (103) of all the cells in the stack must be as equal as possible. This phenomenon is achieved when the cross-sectional area of the inlet channel (102a) in the stack is greater than the sum of the cross-sectional areas of the plurality of inlet orifices (104) in the stack. The sum of the cross-sectional area of the plurality of inlet orifices is calculated by summing up the cross-sectional areas of all the inlet orifices (106) of the inlet pathways (103) that are connecting to the inlet channel (102a). The high-pressure drop within the inlet pathways (103) plays a pivotal role in maintaining a controlled flow of electrolyte from the inlet channel (102a) to the individual cells. The pressure differential established through this design ensures that the electrolyte supplied to the inlet channel (102a) is evenly distributed to the successive cells.

The sum of cross-sectional area of the plurality of orifices is smaller by at least a predetermined factor than the total area of the inlet channel (102a). The predetermined factor ranges from 1 to 4, and the predetermined factor is preferably between 1.2 and 1.8.

To achieve homogenous distribution of the electrolyte between cells in the electrolysis stack, the condition in equation (1) needs to be achieved.

$$1 \cdot A_T < A_{IN} \leq 4 \cdot A_T, \text{ wherein } A_T = A_{PH1} + A_{PH2} + A_{PH3} + \ldots\ldots + A_{PHn} \qquad (1)$$

$A_{IN}$ is cross-sectional area of the inlet channel (102a), $A_T$ is cross-sectional area of the plurality of inlet orifices, $A_{PH1}$ is cross-sectional area of the inlet orifice (106) of the inlet pathway of the first pathway, $A_{PH2}$ is cross-sectional area of the inlet orifice (106) of the inlet pathway of the second pathway, $A_{PHn}$ is cross-sectional area of the inlet orifice (106) of the inlet pathway of the $n^{th}$ pathway and n is number of the inlet pathways connected to the inlet channel (102a).

For a predefined inlet channel (102a) cross section area ($A_{IN}$) and predefined number of cells and considering identical cell frames (100) are used in the stack, different configurations of inlet orifices (106) can be used to ensure homogenous distribution of the electrolyte. In one configuration, all the insets (107) in the stack are of a predetermined thickness to yield the inlet orifices (106) with a predefined cross-sectional area. In another configuration, the insets (107) in the stack have varying thickness to create a gradient in the cross-sectional areas of the orifices. The inset (107) used in the first cell frame is thickest and insets (107) with consecutively decreasing thickness are used along the stack. Thus, the orifices at different positions along the stack (i.e from first end plate toward the second end plate) have progressively increasing cross-sectional areas. This configuration ensures that the earlier cells receive a controlled amount of electrolyte and the electrolyte in the inlet channel (102a) reaches the cell farthest from the first end plate.

The cross-sectional area of the channel/pathway is measured based on the shape of the channel /pathway and is measured in the plane perpendicular to the direction of the electrolyte flow. The cross-sectional area of inlet channel (102a) varies across the length of the stack, as the gaskets can extend inwards the channel, when the stack is compressed together. The cross-sectional area of the inlet channel (102a) considered for the calculation is the average of the cross-sectional area of the inlet channel (102a) over the length of the stack. The inlet pathway (103) can have a single pathway branching into multiple pathways after the inlet orifice, when closer to the central opening (101).

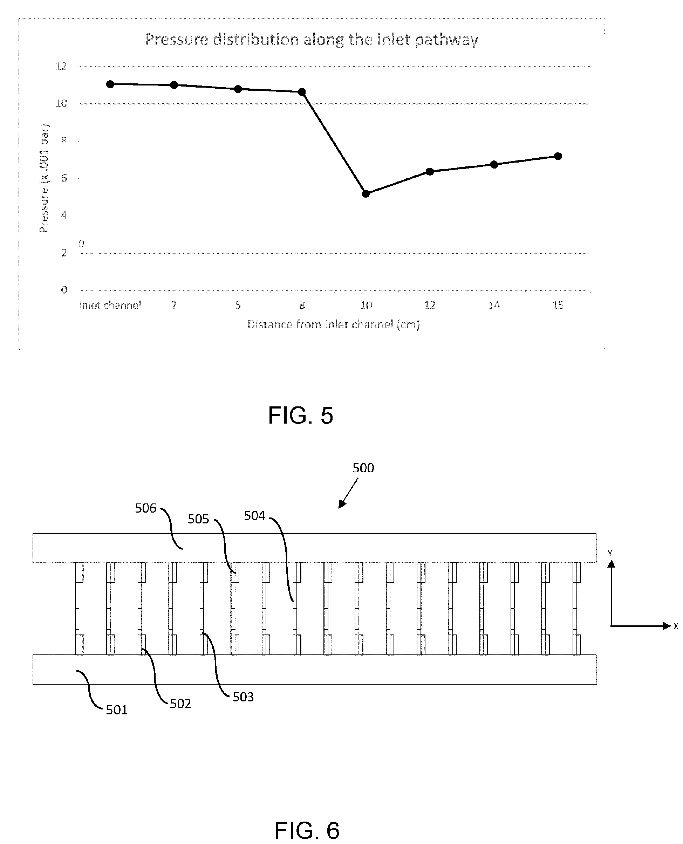

Fig. 5 depicts a graph showing a pressure distribution along the inlet pathway obtained from a CFD-simulation of a model system (400) as shown in Fig. 4. The model system (400) comprises an inlet channel (401), an inlet pathway (402) with an inlet orifice (403), where the cross-sectional area of inlet pathway (402) is reduced to half at the inlet orifice (403). Simulations using a finite element method were performed using typical geometry parameters occurring in an electrolytic cell of the above-mentioned type. As the model system (400) is characterized by a high Reynolds number (over 2000), a turbulent (k-ε) flow model was used to simulate water + KOH (30%) flow through the system (400). The inlet mass flow rate was set to 0.015 kg/s and 0 bar pressure was set to the outlet boundary condition. The result of the simulation is a static pressure field where the pressure of the electrolyte was measured at different locations along the inlet pathway (402), starting from the location near the inlet channel (401) until the location near an exit of the inlet pathway (402). The inlet orifice (403) in the model system (400) is located closer to the central opening around 10cm from the reference point. The intersection of the inlet channel (401) and the inlet pathway (402) is considered as reference point from which location points along the inlet pathway (402) are measured to estimate the corresponding pressure. The graph shows a sudden drop in the electrolyte pressure at location at 10mm from the reference point, where the inlet orifice (403) is located.

FIG. 6 illustrates a model system, which was used for performing Computational Fluid Dynamics (CFD) simulations to study the relation between the inlet channel and the plurality of inlet pathways. The model system (500) comprises an inlet channel (501) and an outlet channel (506) arranged in parallel to each other at a distance along x direction. On the upstream end (low values of x), the inlet channel (501) is connected to the electrolyte source; on the downstream end (high values of x), the inlet channel is terminated. On the downstream end, the outlet channel (506) is connected to the electrolyte sink; on the upstream end, the outlet channel is terminated. The model system (500) further comprises 17 inlet pathways (502), one end of each inlet pathway (502) connected to the inlet channel (501) and the other end connected to an intermediate pathway (504). The inlet orifices (503) are located at the inlet pathways (502), closer to the intermediate pathways. The outlet pathways (505) are connected to the intermediate channels at one end and to the outlet channel (506) at the other end. The electrolyte originating from the inlet channel (501) is injected in a direction perpendicular to the x-axis, over the whole width of the inlet channel (501). The electrolyte passes through the inlet pathways (502) in a y-direction and enters the intermediate pathways (504), passing through the inlet orifices (503). The electrolyte from intermediate pathways (504) is collected and subsequently transported away to the sink through the outlet pathways and the outlet channel. The CFD-simulations are carried out to observe/understand the distribution of the electrolyte among different inlet pathways (502) by measuring the flow rate at the inlet orifice (503) end of the inlet pathways (502).

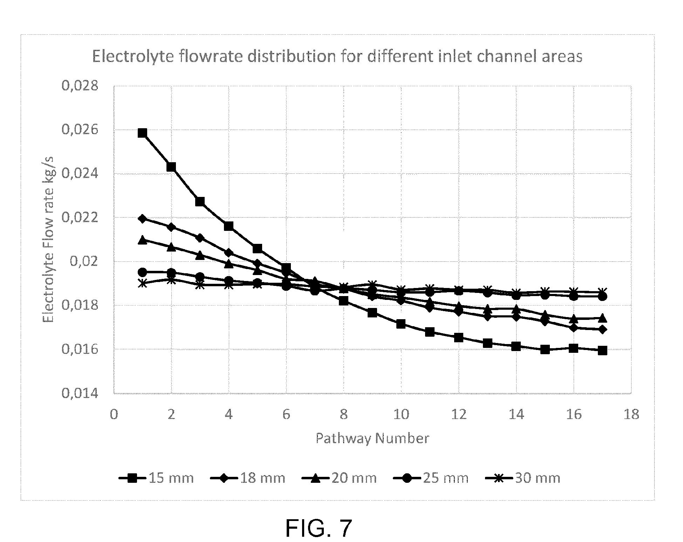

As shown in Fig. 7, the graph plots the flowrates measured at the inlet orifice (503) end as a function of the pathway (502) number (pathway 1 referring to the pathway that is closest to the first end plate and pathway 17 referring to the pathway that is farthest from the first end plate. As mentioned above, to have equal flowrates in all inlet pathways (502), the cross-sectional area of the 17 inlet channels (501) ($A_{IN}$) in the stack must be greater than the sum of the cross-sectional area of the plurality of inlet orifices (503) ($A_T$) in the stack. To see the effect of the above relation, the diameter of the inlet channel (501) and the outlet channel is varied as shown in Table 1, whereas all other conditions are kept constant. The cross-sectional area of the inlet orifice (503) ($A_{PH}$) is the same in all the pathways, which is 0.1.169E [cm$^2$]. The total sum of the cross-sectional areas of 17 inlet orifices (503) ($A_T$) is 2.873 [cm$^2$].

Table 1: The diameter and the cross-sectional area of the inlet channels considered for simulation.

| Case | Inlet Channel Diameter / mm | Inlet Channel Area ($A_{IN}$) / cm$^2$ | Predetermined factor $A_{IN}$ /$A_T$ |
|------|------|------|------|
| 1 | 15 | 1.759 | 0.61 |
| 2 | 18 | 2.534 | 0.88 |
| 3 | 20 | 3.14 | 1.09 |
| 4 | 25 | 4.89 | 1.70 |
| 5 | 30 | 7.05 | 2.45 |

In the context of the model system (500), flow rates at the inlet orifices (503) were systematically measured for various configurations of the inlet channels, as detailed in Table 1, and graphically depicted in Fig. 7. It was observed that in Case 1, where the cross-sectional area of the inlet channels (501) was smaller than the sum of cross-sectional areas of the plurality of inlet orifices (503), the flow rates at the inlet orifices (503) exhibited non-uniformity. Subsequently, as the cross-sectional area of the inlet channel (501) was increased, a noticeable improvement was observed. In Cases 4 and 5, where the cross-sectional area of the inlet channels (501) was significantly greater than the sum of cross-sectional areas of the plurality of inlet orifices (503), a uniform distribution of electrolyte within the pathways was achieved. Furthermore, the uniform flow rates were consistently observed in the inlet pathways (502) when the cross-sectional area of the inlet channel (501) was maintained at a range between 1 to 4 times greater than the sum of cross-sectional areas of the inlet orifices (503).

The flow rates at the inlet orifices (503) for model system (500) with different inlet channels are measured for each case in Table 1 as depicted in graph shown in Fig. 7. The flow rates at the inlet orifices (503) are not uniform in Case 1, where the cross-sectional area of the inlet channels (501) is much lower than the sum of the cross-sectional area of the plurality of inlet orifices (503). Specifically, the electrolyte flow rate through pathway number 1 is 0.026 kg/s, whereas the corresponding flow rate through pathway number 17 is 0.016 kg/s. The ratio of electrolyte flow rate through pathway number 1 to the electrolyte flow rate through pathway number 17 is 1.625 for case 1, which is far from uniform. The situation improves as the cross-sectional area of the inlet channel (501) is increased. For Case 2, the electrolyte flow rate through pathway number 1 is 0.022 kg/s, whereas the corresponding flow rate through pathway number 17 is 0.017 kg/s. The ratio of electrolyte flow rate through pathway number 1 to the electrolyte flow rate through pathway number 17 is 1.29 for case 2, which is not uniform. For Case 3, the electrolyte flow rate through pathway number 1 is 0.021 kg/s, whereas the corresponding flow rate through pathway number 17 is 0.017 kg/s. The ratio of electrolyte flow rate through pathway number 1 to the electrolyte flow rate through pathway number 17 is 1.23 for case 3. As the cross-sectional area of the inlet channel (501) is increased further, uniform distribution of electrolyte can be achieved. For Case 4, the electrolyte flow rate through pathway number 1 is 0.0195 kg/s, whereas the corresponding flow rate through pathway number 17 is 0.0186 kg/s. The ratio of electrolyte flow rate through pathway number 1 to the electrolyte flow rate through pathway number 17 is 1.048 for case 4. In other words, the flow rate difference between pathway number 1 and pathway number 17 is less than 20% of the electrolyte flow rate, which is considered to be uniform in the context of the present invention. For Case 5, the electrolyte flow rate through pathway number 1 is 0.0190 kg/s, whereas the corresponding flow rate through pathway number 17 is 0.0186 kg/s. The ratio of electrolyte flow rate through pathway number 1 to the electrolyte flow rate through pathway number 17 is 1.022 for case 5. The electrolyte flow distribution in case 5 is considered to be uniform. The uniform flow rate is observed in the inlet pathways (502) when the cross-sectional area of the inlet channel (501) is more than 1.095 times the sum of the cross-sectional areas of the inlet orifices (503).

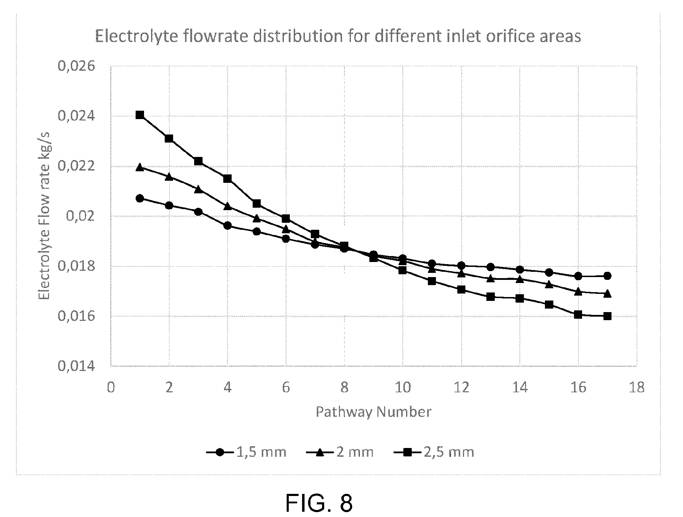

Fig. 8 depicts the flow rates at inlet orifices (503) measured using the model system (500), the inlet channel (501) is kept constant, i.e inlet channel (501) diameter: 18 mm, cross sectional area: 2.534 cm$^2$, whereas the cross-sectional areas of the plurality of inlet orifices (503) is changed for three cases as shown in Table 2. As seen from the graph, the flow rates in the channels see major deviation in Case 6 where the cross-sectional area of the inlet channel (501) is smaller than the sum of the 17 inlet orifices (503) area. Specifically, the electrolyte flow rate through pathway number 1 is 0.024 kg/s, whereas the corresponding flow rate through pathway number 17 is 0.016 kg/s. The ratio of electrolyte flow rate through pathway number 1 to the electrolyte flow rate through pathway number 17 is 1.5 for case 6, which is not uniform. The flow rate distribution improves as the inlet orifice (503) cross sectional area is made smaller as seen in case 7 and 8. Specifically, for case 7, the electrolyte flow rate through pathway number 1 is 0.022 kg/s, whereas the corresponding flow rate through pathway number 17 is 0.017 kg/s. The ratio of electrolyte flow rate through pathway number 1 to the electrolyte flow rate through pathway number 17 is 1.29 for case 7, which is not uniform. For case 8, the electrolyte flow rate through pathway number 1 is 0.0207 kg/s, whereas the corresponding flow rate through pathway number 17 is 0.0176 kg/s. The ratio of electrolyte flow rate through pathway number 1 to the electrolyte flow rate through pathway number 17 is 1.18 for case 8. In other words, the flow rate difference between pathway number 1 and pathway number 17 is less than 20% of the electrolyte flow rate, which is considered to be uniform in the context of the present invention. To achieve uniform flow rates in all channels with minimum deviation, the inlet orifice (503) area is made smaller such that $A_{IN} \geq 1.18 A_T$.

Table 2: The cross-sectional areas of the inlet orifices considered for simulation.

| Case | Inlet orifice Cross-Sectional Area / mm | Sum of 17 Inlet orifices Cross Sectional Area ($A_T$) / cm$^2$ | Predetermined factor $A_{IN}$ /$A_T$ |
|---|---|---|---|
| 6 | 2.5 | 3.591 | 0.71 |
| 7 | 2.0 | 2.874 | 0.88 |
| 8 | 1.5 | 2.154 | 1.18 |

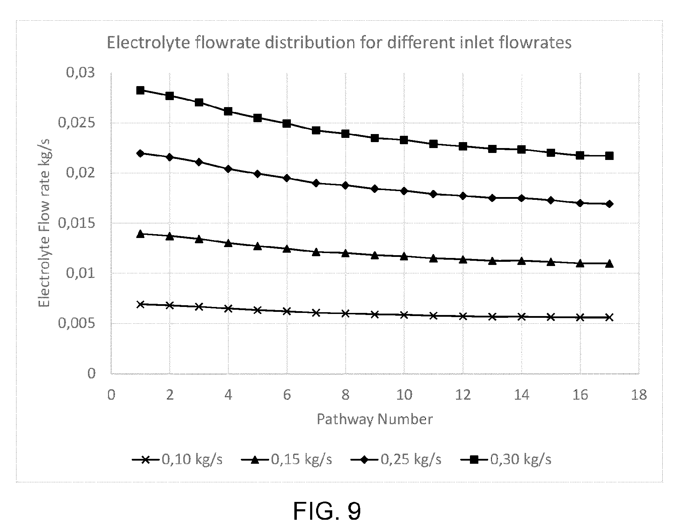

Fig 9 shows a relation between the flowrate at which the electrolyte is supplied to the inlet channel (501) and the flow rate of electrolyte at the inlet orifices (503). The model system (500) is considered for this study of the flow rates. The graph showcases the lower flow rate at the inlet channel (501) yields better uniformity in electrolyte distribution along the cells. As the flow rate at the inlet channel (501) is increased, we can observe increased deviation between the flow rate at the inlet orifice (503) of the first inlet pathway and the inlet orifice (503) of the last inlet pathway.

The size of the stack with maximum number of cells that can used to ensure the uniform distribution of the electrolyte can be determined based on the parameters of the inlet channel and the inlet orifices. For a predefined $A_{IN}$ and $A_{PH}$, maximum number of cells in the stack can be derived as $N = \dfrac{A_{IN}}{A_{PH}}$, where N is the maximum number of cells in the stack for a predefined cross-sectional area of inlet channel ($A_{IN}$) and cross-sectional area of a single inlet orifice ($A_{PH}$).

Therefore, to increase the number of cells in the stack, either cross sectional area of inlet channel or the inlet pathway or in combination are relationally increased. Likewise, in the case of a predetermined stack size comprising the necessary number of cells, the design and arrangement of the cell frames and/or insets are tailored to establish the dimensions of the inlet channel and the inlet orifices in accordance with the specifications required in equation (1). This configuration ensures the uniform and consistent distribution of the electrolyte across the entirety of the stack.

The foregoing description of the specific embodiments will so fully reveal the general nature of the embodiments herein that others can, by applying current knowledge, readily modify and/or adapt for various applications.

It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the appended claims.

Although the embodiments herein are described with various specific embodiments, it will be obvious for a person skilled in the art to practice the invention with modifications. However, all such modifications are deemed to be within the scope of the claims.

It is also to be understood that the following claims are intended to cover all the generic and specific features of the embodiments described herein and all the statements of the scope of the embodiments which as a matter of language might be said to fall there between.

**Claims**

1. A water electrolyser stack using an alkaline medium, comprising:

   a first end plate and a second end plate and a plurality of cells stacked in-between the first and the second end plate;
   wherein each cell is comprising an anode cell frame and a cathode cell frame;
   wherein each cell frame is further comprising:

   a central opening,
   at least one inlet channel transversing through the cell frame, and
   at least one inlet pathway grooved in the cell frame for connecting the inlet channel to the central opening;

   wherein the inlet pathway is comprising at least one inlet orifice **characterized by** a minimum cross-sectional area in the inlet pathway; and
   wherein the cross-sectional area of the inlet channel in the stack is greater than the sum of the cross-sectional area of the plurality of inlet orifices in the stack by at least a predetermined factor, wherein the predetermined factor being larger than 1 and smaller than or equal to 4.

2. The electrolyser stack according to claim 1, wherein the surface of the inlet pathway constitutes a projection to form the inlet orifice by decreasing the width and/or the depth of the inlet pathway.

3. The electrolyser stack according to claim 1, wherein the cell frame comprises an inset installed on the inlet pathway to form the inlet orifice by decreasing the depth and/or the width of the inlet pathway.

4. The electrolyser stack according to claim 3, wherein the surface of the inlet pathway and an inner side of the inset facing the inlet pathway in combination defines the inlet orifice.

5. The electrolyser stack according to claim 3, wherein the inset comprises a feedthrough that forms the inlet orifice when installed in the inlet pathway.

6. The electrolyser according to claim 4, wherein the inner side of the inset is configured as domed shape to constitute larger cross-sectional area of the orifice; alternatively, a protruding section of the inner side of the inset is configured to constitute smaller cross-sectional area of the orifice.

7. The electrolyser stack according to claim 3 to 6, wherein the plurality of insets of varying thickness and/or the dimension of the feedthrough and/or the structure are installed in the plurality of cell frames along the stack to create a gradient in the cross-sectional areas of the orifices, the orifices at different positions along the stack have progressively increasing cross-sectional areas, in the order from the first end plate towards the second end plate.

8. The electrolyser stack according to any of the preceding claims, wherein the predetermined factor is between 1.2 and 1.8.

9. The electrolyser stack according to any of the preceding claims, wherein the anode cell frame is identical to the cathode cell frame, wherein the anode cell frame is rotated by 180 degrees to be used as the cathode cell frame.

10. The electrolyser stack according to any of the preceding claims, wherein the stack is configured for operation of at least the anode or the cathode is operated at elevated pressure at 1.5 to 700 bars, preferably at 16 to 45 bars.

11. The electrolyser stack according to claim 1, wherein at least one inlet channel transversing through the cell frames, extends from the first end plate through the stack towards the second end plate, wherein the stack is configured for the alkaline medium entering and exiting the stack through the first end plate.

**Patentansprüche**

1. Ein Wasserelektrolyseur-Stack, der ein alkalisches Medium verwendet, bestehend aus:

   eine erste Endplatte und eine zweite Endplatte und eine Vielzahl von Zellen, die zwischen der ersten und der zweiten Endplatte gestapelt sind;
   wobei jede Zelle einen Anoden-Zellrahmen und einen Kathoden-Zellrahmen umfasst;
   wobei jeder Zellrahmen ferner umfasst:

      eine zentrale Öffnung,
      mindestens einen Einlasskanal, der durch den Zellrahmen verläuft, und
      mindestens einen in den Zellrahmen eingearbeiteten Einlasskanal zum Verbinden des Einlasskanals mit der zentralen Öffnung;

   wobei der Einlassweg mindestens eine Einlassöffnung umfasst, die durch eine minimale Querschnittsfläche im Einlassweg gekennzeichnet ist; und
   wobei die Querschnittsfläche des Einlasskanals im Stapel um mindestens einen vorbestimmten Faktor größer ist als die Summe der Querschnittsflächen der mehreren Einlassöffnungen im Stapel, wobei der vorbestimmte Faktor größer als 1 und kleiner oder gleich 4 ist.

2. Elektrolyseur-Stapel gemäß Anspruch 1, wobei die Oberfläche des Einlasskanals einen Vorsprung bildet, um die Einlassöffnung durch Verringern der Breite und/oder der Tiefe des Einlasskanals zu bilden.

3. Elektrolyseur-Stapel gemäß Anspruch 1, wobei der Zellrahmen eine Einlage umfasst, die auf dem Einlassweg installiert ist, um die Einlassöffnung durch Verringern der Tiefe und/oder der Breite des Einlasswegs zu bilden.

4. Elektrolyseur-Stapel gemäß Anspruch 3, wobei die Oberfläche des Einlasskanals und eine dem Einlasskanal zugewandte Innenseite des Einsatzes in Kombination die Einlassöffnung definieren.

5. Elektrolyseur-Stapel gemäß Anspruch 3, wobei der Einsatz eine Durchführung umfasst, die die Einlassöffnung bildet, wenn sie in den Einlasskanal eingebaut ist.

6. Elektrolyseur gemäß Anspruch 4, wobei die Innenseite des Einsatzes als gewölbte Form ausgebildet ist, um eine größere Querschnittsfläche der Öffnung zu bilden; alternativ ist ein vorstehender Abschnitt der Innenseite des Einsatzes so ausgebildet, dass er eine kleinere Querschnittsfläche der Öffnung bildet.

7. Elektrolyseur-Stapel gemäß Anspruch 3 bis 6, wobei die mehreren Einsätze mit unterschiedlicher Dicke und/oder die Abmessung der Durchführungen und/oder die Struktur in den mehreren Zellrahmen entlang des Stapels installiert sind, um einen Gradienten in den Querschnittsflächen der Öffnungen zu erzeugen, wobei die Öffnungen an verschiedenen Positionen entlang des Stapels in der Reihenfolge von der ersten Endplatte zur zweiten Endplatte hin zunehmend größere Querschnittsflächen aufweisen.

8. Elektrolyseur-Stapel gemäß einem der vorstehenden Ansprüche, wobei der vorbestimmte Faktor zwischen 1,2 und 1,8 liegt.

9. Der Elektrolyseurstapel gemäß einem der vorstehenden Ansprüche, wobei der Anodenzellrahmen mit dem Kathodenzellrahmen identisch ist, wobei der Anodenzellrahmen um 180 Grad gedreht wird, um als Kathodenzellrahmen verwendet zu werden.

10. Elektrolyseurstapel gemäß einem der vorstehenden Ansprüche, wobei der Stapel für den Betrieb zumindest der Anode oder der Kathode bei erhöhtem Druck von 1,5 bis 700 bar, vorzugsweise bei 16 bis 45 bar, konfiguriert ist.

11. Elektrolyseur-Stapel gemäß Anspruch 1, wobei sich mindestens ein Einlasskanal, der durch die Zellrahmen verläuft, von der ersten Endplatte durch den Stapel zur zweiten Endplatte erstreckt, wobei der Stapel so konfiguriert ist, dass das alkalische Medium durch die erste Endplatte in den Stapel eintritt und diesen verlässt.

**Revendications**

1. Pile d'électrolyseurs d'eau utilisant un milieu alcalin, comprenant :

   une première plaque d'extrémité et une deuxième plaque d'extrémité, et une pluralité de cellules empilées entre la première et la deuxième plaque d'extrémité ;
   dans laquelle chaque cellule comprend un cadre de cellule anodique et un cadre de cellule cathodique ;
   chaque cadre de cellule comprenant en outre :

   une ouverture centrale,
   au moins un canal d'entrée traversant le cadre de cellule, et
   au moins un passage d'entrée rainuré dans le cadre de cellule pour relier le canal d'entrée à l'ouverture centrale ;

   dans lequel le chemin d'entrée comprend au moins un orifice d'entrée **caractérisé par** une section transversale minimale dans le chemin d'entrée ; et
   dans lequel la section transversale du canal d'entrée dans la pile est supérieure à la somme de la section transversale de la pluralité d'orifices d'entrée dans la pile d'au moins un facteur prédéterminé, dans lequel le facteur prédéterminé est supérieur à 1 et inférieur ou égal à 4.

2. La pile d'électrolyseurs selon la revendication 1, dans laquelle la surface du chemin d'entrée constitue une saillie pour former l'orifice d'entrée en diminuant la largeur et/ou la profondeur du chemin d'entrée.

3. La pile d'électrolyseurs selon la revendication 1, dans laquelle le cadre de cellule comprend un encastrement installé sur le chemin d'entrée pour former l'orifice d'entrée en diminuant la profondeur et/ou la largeur du chemin d'entrée.

4. Empilement d'électrolyseurs selon la revendication 3, dans lequel la surface du passage d'entrée et un côté intérieur de l'encastrement faisant face au passage d'entrée définissent ensemble l'orifice d'entrée.

5. Empilement d'électrolyseurs selon la revendication 3, dans lequel l'insert comprend un passage qui forme l'orifice d'entrée lorsqu'il est installé dans le chemin d'entrée.

6. L'électrolyseur selon la revendication 4, dans lequel la face interne de l'insert est configurée en forme de dôme afin de constituer une plus grande section transversale de l'orifice ; t alternativement, une partie saillante de la face interne de l'insert est configurée pour constituer une plus petite section transversale de l'orifice.

7. La pile d'électrolyseurs selon les revendications 3 à 6, dans laquelle la pluralité d'inserts d'épaisseur variable et/ou la dimension du passage et/ou la structure sont installés dans la pluralité de cadres de cellules le long de la pile pour créer un gradient dans les sections transversales des orifices, les orifices à différentes positions le long de la pile ayant des sections transversales progressivement croissantes, dans l'ordre de la première plaque d'extrémité vers la deuxième plaque d'extrémité.

8. La pile d'électrolyseurs selon l'une quelconque des revendications précédentes, dans laquelle le facteur prédéterminé est compris entre 1,2 et 1,8.

9. La pile d'électrolyseurs selon l'une quelconque des revendications précédentes, dans laquelle le cadre de cellule d'anode est identique au cadre de cellule de cathode, dans laquelle le cadre de cellule d'anode est tourné de 180 degrés pour être utilisé comme cadre de cellule de cathode.

10. Empilement d'électrolyseurs selon l'une quelconque des revendications précédentes, dans lequel l'empilement est configuré pour fonctionner au moins avec l'anode ou la cathode à une pression élevée comprise entre 1,5 et 700 bars, de préférence entre 16 et 45 bars.

11. La pile d'électrolyseurs selon la revendication 1, dans laquelle au moins un canal d'entrée traversant les cadres de cellules s'étend depuis la première plaque d'extrémité à travers la pile vers la deuxième plaque d'extrémité, dans laquelle la pile est configurée pour que le milieu alcalin entre et sorte de la pile à travers la première plaque d'extrémité.

FIG. 1a

FIG. 1b

FIG. 2a

FIG. 2b

FIG. 2c          FIG. 2d          FIG. 2e

FIG. 3

FIG. 4

FIG. 5

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4071277 A1
- US 11326267 B2
- US 20230155143 A1
- US 20120155143 A1
- US 6554978 B1
- KR 20220065541 A
- KR 102324396 B1
- EP 4130340 A1